(19) **Europäisches Patentamt**
**European Patent Office**
**Office européen des brevets**

(11) **EP 3 742 746 A1**

(12) **EUROPEAN PATENT APPLICATION**
published in accordance with Art. 153(4) EPC

(43) Date of publication:
**25.11.2020 Bulletin 2020/48**

(21) Application number: **18905871.2**

(22) Date of filing: **27.12.2018**

(51) Int Cl.:
**H04N 21/647** *(2011.01)*  **H04N 21/24** *(2011.01)*
**H04N 21/238** *(2011.01)*  **H04N 21/234** *(2011.01)*
**H04N 21/231** *(2011.01)*

(86) International application number:
**PCT/CN2018/124101**

(87) International publication number:
**WO 2019/153930 (15.08.2019 Gazette 2019/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.02.2018 CN 201810142299**

(71) Applicant: **HUAWEI TECHNOLOGIES CO., LTD.
Shenzhen, Guangdong 518129 (CN)**

(72) Inventors:
• **CHEN, Jian**
  **Shenzhen, Guangdong 518129 (CN)**
• **ZHANG, Jinhui**
  **Shenzhen, Guangdong 518129 (CN)**

• **ZHU, Xia**
  **Shenzhen, Guangdong 518129 (CN)**
• **XIONG, Jie**
  **Shenzhen, Guangdong 518129 (CN)**
• **YANG, Rong**
  **Shenzhen, Guangdong 518129 (CN)**
• **CHEN, Gang**
  **Shenzhen, Guangdong 518129 (CN)**
• **LIN, Tao**
  **Shenzhen, Guangdong 518129 (CN)**
• **XIA, Nu**
  **Shenzhen, Guangdong 518129 (CN)**

(74) Representative: **Maiwald Patent- und
Rechtsanwaltsgesellschaft mbH
Elisenhof
Elisenstraße 3
80335 München (DE)**

(54) **METHOD AND DEVICE FOR REALIZING VIDEO SERVICE, AND COMMUNICATION SYSTEM AND COMPUTER-READABLE STORAGE MEDIUM**

(57) This application discloses a method and device for implementing a video service, a communications system, and a computer-readable storage medium. The method includes: obtaining feature information of a video stream, where the feature information of the video stream includes information used to indicate a highest bit rate of the video stream; and determining a smooth rate based on the feature information of the video stream, where the smooth rate is not less than the highest bit rate of the video stream, and the smooth bit rate is used to determine a time interval at which a target device sends a data packet of the video stream to a video terminal. According to technical solutions of this application, a probability that a downstream device of the target device receives burst traffic may be effectively reduced, thereby reducing a packet loss on a caused by video traffic burst.

FIG. 3A

## Description

This application claims priority to Chinese Patent Application No. 201810142299.2, filed with the Chinese Patent Office on February 11, 2018 and entitled "METHOD AND DEVICE FOR IMPLEMENTING VIDEO SERVICE, COMMUNICATIONS SYSTEM, AND COMPUTER-READABLE STORAGE MEDIUM", which is incorporated herein by reference in its entirety.

## TECHNICAL FIELD

This application relates to the field of video services, and in particular, to a method and device for implementing a video service, a communications system, and a computer-readable storage medium.

## BACKGROUND

With development of communications technologies, video services such as IPTV (Internet Protocol Television, internet protocol television) and over the top (Over The Top, OTT) enter a large-scale commercial use stage. To ensure quality of the video services, building a network focusing on video experience is an important problem that an operator needs to face to enhance competitiveness.

If a packet loss occurs during video playback, frame freezing or artifacts of a video image may occur. Therefore, the packet loss is a main cause of poor video experience. An important cause of the packet loss on a network is traffic burst. When the traffic burst occurs, a large quantity of data packets are received in a short period of time. Consequently, a queue buffer overflows and the packet loss occurs.

## SUMMARY

Embodiments of the present invention provide a method and device for implementing a video service, and a system, to reduce a packet loss caused by traffic burst.

According to a first aspect, a method for implementing a video service is provided, and the method includes: obtaining feature information of a video stream, where the feature information of the video stream includes information used to indicate a highest bit rate of the video stream; and determining a smooth rate based on the feature information of the video stream, where the smooth rate is not less than the highest bit rate of the video stream, and the smooth bit rate is used to determine a time interval at which a target device sends a data packet of the video stream to a video terminal.

According to an implementation of the first aspect, the smooth rate determined based on the highest bit rate of the video stream is not less than the highest bit rate of the video stream, and the time interval at which the data packet is sent and that is determined based on the smooth rate may ensure that the target device sends the data packet to the video terminal at a constant speed at the smooth rate. Therefore, on the premise of ensuring smoothness of video playback, a probability that a downstream device of the target device receives burst traffic may be effectively reduced, thereby reducing a packet loss on a network caused by video traffic burst.

In a first possible implementation of the first aspect, the feature information of the video stream further includes information used to indicate a maximum sending rate of the video stream. Because the maximum sending rate of the video stream is further considered when the smooth rate is determined, when a sending rate of the video stream received by the target device is relatively large, the smoothness of the video playback may further be effectively ensured.

According to the first aspect or the first implementation of the first aspect, in a second implementation of the first aspect, a first rate may be determined based on the feature information of the video stream, and the first rate is not less than the highest bit rate of the video stream. During specific implementation, the first rate may be used as the smooth rate, or a smaller value between the first rate and a maximum available bandwidth corresponding to the video terminal may be determined as the smooth rate.

If a method for determining the smaller value between the first rate and the maximum available bandwidth corresponding to the video terminal as the smooth rate is used, when the first rate is greater than the maximum available bandwidth, a magnitude of the determined smooth rate is the same as the maximum available bandwidth corresponding to the video terminal, that is, the magnitude of the determined smooth rate is not greater than the maximum available bandwidth corresponding to the video terminal. Therefore, occupation of network bandwidth by the target device does not affect transmission quality of another data transmitted in a network. Therefore, on the premise of ensuring a video playback effect of the video terminal as much as possible, the transmission quality of the another data in the network may be effectively ensured.

According to the second implementation of the first aspect, in a third implementation of the first aspect, the first rate may be positively correlated with the highest bit rate of the video stream. A larger highest bit rate of the video stream indicates a larger determined first rate. Therefore, the smoothness of video playback may be effectively improved.

The highest bit rate of the video stream is a rate of the video data (namely, bare data). When the video data is transmitted, the video data needs to be encapsulated into the data packet. In addition, to ensure reliability of data transmission, usually, service quality assurance (Service Quality Assurance, SQA) mechanisms such as forward error correction (Forward Error Correction, FEC) and retransmission (Retransmission, RET) are also used, and the mechanisms cause extra traffic overheads.

To more accurately calculate the first rate, when the first rate is determined, traffic overheads caused by a transmission overhead factor such as packet header encapsulation or an SQA mechanism further need to be considered. The transmission overhead factor may be represented as a transmission overhead coefficient a.

Correspondingly, to more accurately calculate the first rate, according to the second implementation or the third implementation of the first aspect, in a fourth implementation of the first aspect, the determined first rate is positively correlated with the transmission overhead coefficient a, where $1<a\leq2$. During specific implementation, the feature information of the video stream further includes a type of a transport layer protocol of the video stream, and a value of a is related to the type of the transport layer protocol of the video stream. For example, when the transport layer protocol of the video stream is the transmission control protocol (Transmission Control Protocol, TCP), $a\in[1.05, 1.11]$; or when the transport layer protocol of the video stream is the user datagram protocol (User Datagram Protocol, UDP), $a\in[1.05, 1.2]$. For example, a=1.17. Because transmission overheads when the UDP protocol is used are usually greater than transmission overheads when the TCP protocol is used, a value of a corresponding to UDP may be greater than a value of a corresponding to TCP, so that the first rate is calculated more accurately.

According to the first aspect or any one of the first to fourth implementations of the first aspect, in a fifth implementation, the information used to indicate the highest bit rate of the video stream includes an average bit rate $E_{ave}$ of the video stream and a ratio R of the highest bit rate of the video stream to the average bit rate $E_{ave}$ of the video stream; the information used to indicate the maximum sending rate of the video stream includes the average bit rate $E_{ave}$ and a ratio n of the maximum sending rate of the video stream to the average bit rate $E_{ave}$ of the video stream; and the determining the first rate based on the feature information of the video stream includes: calculating the first rate S1 based on the following formula: $S1=a*n*R*E_{ave}$.

An application layer control protocol of the video stream may be the real time streaming protocol (Real Time Streaming Protocol, RTSP). Correspondingly, when the video terminal enables a fast cache function, $n\in[1.1, 1.3]$; or when the video terminal does not enable the fast cache function, n is 1.

A maximum sending rate when the video terminal enables the fast cache is usually greater than a maximum sending rate when the video terminal does not enable the fast cache. Therefore, based on whether the video terminal enables the fast cache, the value of n is determined and the first rate is calculated, so that the first rate obtained through calculating is more accurately.

According to the first aspect or any one of the foregoing implementations of the first aspect, in a sixth implementation, the method is performed by the target device. Correspondingly, after the determining a smooth rate based on the feature information of the video stream, the method further includes: determining, by the target device, the time interval based on the smooth rate, and sending the data packet of the video stream to the video terminal at the time interval.

According to the sixth implementation of the first aspect, in a seventh implementation, the target device is a transmission device located between a video server that sends the video stream and the video terminal, and the sending the data packet of the video stream to the video terminal at the time interval includes: when the target device receives the data packet that is of the video stream and that is sent by the video server, sending, by the target device, the received data packet of the video stream to the video terminal at the time interval.

According to the seventh implementation of the first aspect, in an eighth implementation, a queue buffer is further allocated to the video stream after the smooth rate is determined. A length of the queue buffer may be positively correlated with the smooth rate. For example, the length of the queue buffer is a product of the smooth rate and cache duration C, where $10 \text{ ms}\leq C\leq1000 \text{ ms}$. Because a larger smooth rate of the video stream indicates a larger queue buffer allocated to the video stream, a buffer overflow risk may be effectively reduced.

When the transport layer protocol of the video stream is TCP, in a process of transmitting the data packet of the video stream between the video server and the video terminal, the method may further include: when determining that an occupation amount of the queue buffer of the video stream exceeds an occupation threshold, modifying a size of a receive window in a TCP acknowledgment (acknowledgment, ACK) packet received from the video terminal to a size of a remaining buffer of the queue buffer, and sending the TCP ACK packet carrying the modified size of the receive window to the video server.

Because the occupation amount of the queue buffer of the video stream exceeds the occupation threshold, the remaining buffer of the queue buffer is relatively small, that is, the modified size of the receive window is relatively small. Therefore, the video server reduces a rate of sending the video stream based on the modified size of the receive window, thereby effectively reducing a risk of the packet loss caused by a queue buffer overflow.

The occupation threshold may be greater than 50% of the length of the queue buffer, for example, greater than 60% of the length of the queue buffer and less than 70% of the length of the queue buffer. Because the occupation threshold is set to be relatively large, usage of the queue buffer may be effectively improved.

When the target device is the transmission device located between the video server that sends the video stream and the video terminal, and the method is performed by the target device, the obtaining feature information of a video stream includes: receiving control signaling corresponding to the video stream transmitted between the video terminal and the video server, and determining a part or all of the feature information of the video stream based on the control signaling. Because the feature information of the video stream may be obtained by parsing the control signaling, and the feature information of the video stream does not need to be obtained by interacting with the video server or the video terminal, load of the video server or the video terminal may be effectively reduced.

According to the first aspect or any one of the first to fifth implementations of the first aspect, in a ninth implementation, the method may be performed by a traffic engineering device. Correspondingly, before the obtaining feature information of a video stream, the method further includes: receiving, by the traffic engineering device, a resource reservation request, where the resource reservation request includes the feature information of the video stream. The obtaining feature information of a video stream includes: obtaining, by the traffic engineering device, the feature information of the video stream from the resource reservation request. After the determining a smooth rate of the video stream based on the feature information of the video stream, the method further includes: allocating, by the traffic engineering device, a bandwidth resource between the target device and the video terminal to the video stream based on the smooth rate, and sending the smooth rate to the target device.

Because the bandwidth resource between the target device and the video terminal may be allocated based on the smooth rate, a risk of the packet loss of the video stream in a downstream of the target device may be effectively reduced, and transmission quality of the video stream is ensured.

Further, the resource reservation request may further include location information of the video terminal. Correspondingly, before the allocating, by the traffic engineering device, a bandwidth resource between the target device and the video terminal to the video stream based on the smooth rate, the method further includes: determining, by the traffic engineering device based on the smooth rate and the location information, a transmission path that is between the target device and the video terminal and that meets a requirement of transmitting the video stream at the smooth rate.

Because instead of passively performing resource reservation only when an available bandwidth resource of an existing path meets the requirement of transmitting the video stream at the smooth rate, the transmission path that meets the requirement of transmitting the video stream at the smooth rate may be actively determined and the resource reservation is performed, a probability of successfully performing the resource reservation is relatively high, so that communication efficiency may be effectively improved.

According to a second aspect, a method for implementing a video service is provided, the method is performed by a transmission device located between a video server and a video terminal, and a video stream sent by the video server to the video terminal is transmitted by using the transmission device. The method includes: receiving, by the transmission device, an identifier of the video stream and a smooth rate of the video stream, and when receiving a data packet of the video stream identified by the identifier of the video stream, sending the received data packet of the video stream to the video terminal at the time interval.

According to an implementation of the second aspect, the transmission device sends the data packet to the video terminal at a constant speed at the time interval at which the data packet is sent and that is determined based on the smooth rate. Therefore, a probability that a downstream device of the transmission device receives burst traffic may be effectively reduced, thereby reducing a packet loss on a network caused by video traffic burst.

In a first implementation of the second aspect, control signaling transmitted between the video server and the video terminal is transmitted by using the transmission device, and a transport layer protocol of the video stream is TCP. In a process in which the transmission device transmits the data packet of the video stream between the video server and the video terminal, the method further includes: when determining that an occupation amount of a queue buffer of the video stream exceeds an occupation threshold, modifying, by the transmission device, a size of a receive window in a TCP ACK packet received from the video terminal to a size of a remaining buffer of the queue buffer, and sending the TCP ACK packet carrying the modified size of the receive window to the video server.

Because the occupation amount of the queue buffer of the video stream exceeds the occupation threshold, the remaining buffer of the queue buffer is relatively small, that is, the modified size of the receive window is relatively small. Therefore, the video server reduces a rate of sending the video stream based on the modified size of the receive window, thereby effectively reducing a risk of the packet loss caused by a queue buffer overflow.

According to a third aspect, a device for implementing a video service is provided, and the device includes an obtaining unit and a determining unit.

The obtaining unit is configured to obtain feature information of a video stream, where the feature information of the video stream includes information used to indicate a highest bit rate of the video stream. The information used to indicate the highest bit rate of the video stream includes an average bit rate of the video stream and a ratio of the highest bit rate of the video stream to the average bit rate of the video stream, or the information used to indicate the highest bit rate of the video stream includes the highest bit rate of the video stream.

The determining unit is configured to determine a smooth rate based on the feature information of the video stream, where the smooth rate is not less than the highest bit rate of the video stream, and the smooth bit rate is used to determine a time interval at which a target device sends a data packet of the video stream to a video terminal.

According to an implementation of the third aspect, the smooth rate determined based on the highest bit rate of the video stream is not less than the highest bit rate of the video stream, and the time interval at which the data packet is sent and that is determined based on the smooth rate may ensure that the target device sends the data packet to the video terminal at a constant speed at the smooth rate. Therefore, on the premise of ensuring smoothness of video playback, a probability that a downstream device of the target device receives burst traffic may be effectively reduced, thereby reducing a packet loss on a network caused by video traffic burst.

In a first possible implementation of the third aspect, the feature information of the video stream further includes information used to indicate a maximum sending rate of the video stream. The information used to indicate the maximum sending rate of the video stream includes an average bit rate of the video stream and a ratio of the maximum sending rate of the video stream to the average bit rate of the video stream, or the information used to indicate the maximum sending rate of the video stream includes the maximum sending rate of the video stream. Because the maximum sending rate of the video stream is further considered when the smooth rate is determined, when a sending rate of the video stream received by the target device is relatively large, the smoothness of the video playback may further be effectively ensured.

According to the third aspect or the first implementation of the third aspect, in a second implementation of the third aspect, the determining unit may be specifically configured to determine a first rate based on the feature information of the video stream, where the first rate is not less than the highest bit rate of the video stream. During specific implementation, the first rate may be used as the smooth rate, or a smaller value between the first rate and a maximum available bandwidth corresponding to the video terminal may be determined as the smooth rate.

If a method for determining the smaller value between the first rate and the maximum available bandwidth corresponding to the video terminal as the smooth rate is used, when the first rate is greater than the maximum available bandwidth, a magnitude of the determined smooth rate is the same as the maximum available bandwidth corresponding to the video terminal, that is, the magnitude of the determined smooth rate is not greater than the maximum available bandwidth corresponding to the video terminal. Therefore, occupation of network bandwidth by the target device does not affect transmission quality of another data transmitted in a network. Therefore, on the premise of ensuring a video playback effect of the video terminal as much as possible, the transmission quality of the another data in the network may be effectively ensured.

According to a second implementation of the third aspect, in a third implementation of the third aspect, the first rate may be positively correlated with the highest bit rate of the video stream. A larger highest bit rate of the video stream indicates a larger determined first rate. Therefore, the smoothness of video playback may be effectively improved.

The highest bit rate of the video stream is a rate of the video data (namely, bare data). When the video data is transmitted, the video data needs to be encapsulated into the data packet. In addition, to ensure reliability of data transmission, usually, SQA mechanisms such as forward error correction FEC and RET are also used, and the mechanisms cause extra traffic overheads. To more accurately calculate the first rate, when the first rate is determined, traffic overheads caused by a transmission overhead factor such as packet header encapsulation or an SQA mechanism further need to be considered. The transmission overhead factor may be represented as a transmission overhead coefficient a.

Correspondingly, to more accurately calculate the first rate, according to the second implementation or the third implementation of the third aspect, in a fourth implementation of the third aspect, the determined first rate is positively correlated with the transmission overhead coefficient a, where $1 < a \leq 2$. During specific implementation, the feature information of the video stream further includes a type of a transport layer protocol of the video stream, and a value of a is related to the type of the transport layer protocol of the video stream. For example, when the transport layer protocol of the video stream is TCP, $a \in [1.05, 1.11]$, or when the transport layer protocol of the video stream is UDP, $a \in [1.05, 1.2]$. For example, $a = 1.17$. Because transmission overheads when the UDP protocol is used are usually greater than transmission overheads when the TCP protocol is used, a value of a corresponding to UDP may be greater than a value of a corresponding to TCP, so that the first rate is calculated more accurately.

According to the third aspect or any one of the first to fourth implementations of the third aspect, in a fifth implementation, the information used to indicate the highest bit rate of the video stream includes an average bit rate $E_{ave}$ of the video stream and a ratio R of the highest bit rate of the video stream to the average bit rate $E_{ave}$ of the video stream; the information used to indicate the maximum sending rate of the video stream includes the average bit rate $E_{ave}$ and a ratio n of the maximum sending rate of the video stream to the average bit rate $E_{ave}$ of the video stream; and the determining unit calculates the first rate S1 based on the following formula: $S1 = a * n * R * E_{ave}$.

An application layer control protocol of the video stream may be RTSP. Correspondingly, when the video terminal enables a fast cache function, $n \in [1.1, 1.3]$; or when the video terminal does not enable the fast cache function, n is 1.

A maximum sending rate when the video terminal enables the fast cache is usually greater than a maximum sending rate when the video terminal does not enable the fast cache. Therefore, based on whether the video terminal enables the fast cache, the value of n is determined and the first rate is calculated, so that the first rate obtained through calculating is more accurately.

According to the third aspect or any one of the foregoing implementations of the third aspect, in a sixth implementation, the device and the target device are a same device. Correspondingly, the device further includes a processing unit and a transmission unit, and the processing unit is configured to: determine the time interval based on the smooth rate, and send the data packet of the video stream to the video terminal at the time interval by using the transmission unit.

According to the sixth implementation of the third aspect, in a seventh implementation, the device is a transmission device located between a video server that sends the video stream and the video terminal, or a service board card in the transmission device. The processing unit is specifically configured to: when receiving, by using the transmission unit, the data packet that is of the video stream and that is sent by the video server, send the received data packet of the video stream to the video terminal at the time interval by using the transmission unit.

According to the seventh implementation of the third aspect, in an eighth implementation, the processing unit further allocates a queue buffer to the video stream. A length of the queue buffer may be positively correlated with the smooth rate. For example, the length of the queue buffer is a product of the smooth rate and cache duration C, where 10 ms≤C≤1000 ms. Because a larger smooth rate of the video stream indicates a larger queue buffer allocated to the video stream, a buffer overflow risk may be effectively reduced.

When the transport layer protocol of the video stream is TCP, the processing unit is further configured to: when determining that an occupation amount of the queue buffer of the video stream exceeds an occupation threshold, modify a size of a receive window in a TCP ACK packet received from the video terminal by using the transmission unit to a size of a remaining buffer of the queue buffer, and send, to the video server by using the transmission unit, the TCP ACK packet carrying the modified size of the receive window.

Because the occupation amount of the queue buffer of the video stream exceeds the occupation threshold, the remaining buffer of the queue buffer is relatively small, that is, the modified size of the receive window is relatively small. Therefore, the video server reduces a rate of sending the video stream based on the modified size of the receive window, thereby effectively reducing a risk of the packet loss caused by a queue buffer overflow.

The occupation threshold may be greater than 50% of the length of the queue buffer, for example, greater than 60% of the length of the queue buffer and less than 70% of the length of the queue buffer. Because the occupation threshold is set to be relatively large, usage of the queue buffer may be effectively improved.

When the device and the target device are a same device, and the target device is a transmission device located between the video server that sends the video stream and the video terminal, the obtaining unit may specifically be configured to determine a part or all of the feature information of the video stream based on control signaling that is corresponding to the video stream transmitted between the video terminal and the video server and that is received by the device. Because the feature information of the video stream may be obtained by parsing the control signaling, and the feature information of the video stream does not need to be obtained by interacting with the video server or the video terminal, load of the video server or the video terminal may be effectively reduced.

According to the third aspect or any one of the first to fifth implementations of the third aspect, in a ninth implementation, the device may be a traffic engineering device. Correspondingly, the device further includes a resource reservation unit and a transmission unit. The transmission unit is configured to receive a resource reservation request, where the resource reservation request includes the feature information of the video stream. The obtaining unit is specifically configured to obtain the feature information of the video stream from the resource reservation request. The resource allocation unit is configured to: allocate a bandwidth resource between the target device and the video terminal to the video stream based on the smooth rate, and send the smooth rate to the target device by using the transmission unit.

Because the bandwidth resource between the target device and the video terminal may be allocated based on the smooth rate, a risk of the packet loss of the video stream in a downstream of the target device may be effectively reduced, and transmission quality of the video stream is ensured.

Further, the resource reservation request may further include location information of the video terminal. Correspondingly, before the allocating a bandwidth resource between the target device and the video terminal to the video stream based on the smooth rate, the resource reservation unit is further configured to determine, based on the smooth rate and the location information, a transmission path that is between the target device and the video terminal and that meets a requirement of transmitting the video stream at the smooth rate.

Because instead of passively performing resource reservation only when an available bandwidth resource of an existing path meets the requirement of transmitting the video stream at the smooth rate, the transmission path that meets the requirement of transmitting the video stream at the smooth rate may be actively determined and the resource reservation is performed, a probability of successfully performing the resource reservation is relatively high, so that communication efficiency may be effectively improved.

According to a fourth aspect, a transmission device for implementing a video service is provided, and a video stream sent by a video server to a video terminal is transmitted by using the transmission device. The transmission device includes a processing unit and a transmission unit. The transmission unit is configured to receive an identifier of the video stream and a smooth rate of the video stream. The processing unit is configured to: when receiving, by using the transmission unit, a data packet of the video stream identified by the identifier of the video stream, send the received data packet of the video stream to the video terminal at the time interval by using the transmission unit.

According to an implementation of the fourth aspect, the transmission device sends the data packet to the video terminal at a constant speed at the time interval at which the data packet is sent and that is determined based on the smooth rate. Therefore, a probability that a downstream device of the transmission device receives burst traffic may be effectively reduced, thereby resolving a problem of a packet loss on a network caused by video traffic burst.

In a first implementation of the fourth aspect, control signaling transmitted between the video server and the video terminal is transmitted by using the transmission device, and a transport layer protocol of the video stream is the transmission control protocol TCP. The processing unit is further configured to: when determining that an occupation amount of a queue buffer of the video stream exceeds an occupation threshold, modify a size of a receive window in a TCP ACK packet received from the video terminal by using the transmission unit to a size of a remaining buffer of the queue buffer, and send, to the video server by using the transmission unit, the TCP ACK packet carrying the modified size of the receive window.

Because the occupation amount of the queue buffer of the video stream exceeds the occupation threshold, the remaining buffer of the queue buffer is relatively small, that is, the modified size of the receive window is relatively small. Therefore, the video server reduces a rate of sending the video stream based on the modified size of the receive window, thereby effectively reducing a risk of the packet loss caused by a queue buffer overflow.

According to a fifth aspect, a communications system is provided, and includes a target device and a determining device.

The determining device is configured to: obtain feature information of a video stream; determine a smooth rate based on the feature information of the video stream; and send the smooth rate to the target device, where the feature information of the video stream includes information used to indicate a highest bit rate of the video stream, and the smooth rate is not less than the highest bit rate of the video stream.

The target device is configured to: receive the smooth rate sent by the target device; determine, based on the smooth rate, a time interval for sending a data packet of the video stream to the video terminal; and send the data packet of the video stream to the video terminal at the time interval.

According to an implementation of the fifth aspect, the smooth rate determined based on the highest bit rate of the video stream is not less than the highest bit rate of the video stream, and the time interval at which the data packet is sent and that is determined based on the smooth rate may ensure that the target device sends the data packet to the video terminal at a constant speed at the smooth rate. Therefore, on the premise of ensuring smoothness of video playback, a probability that a downstream device of the target device receives burst traffic may be effectively reduced, thereby reducing a packet loss on a network caused by video traffic burst.

In a first implementation of the fifth aspect, control signaling transmitted between the video server and the video terminal is transmitted by using the target device, and a transport layer protocol of the video stream is TCP.

The target device is further configured to: when determining that an occupation amount of a queue buffer of the video stream exceeds an occupation threshold, modify a size of a receive window in a TCP ACK packet received from the video terminal to a size of a remaining buffer of the queue buffer, and send the TCP ACK packet carrying the modified size of the receive window to the video server.

Because the occupation amount of the queue buffer of the video stream exceeds the occupation threshold, the remaining buffer of the queue buffer is relatively small, that is, the modified size of the receive window is relatively small. Therefore, the video server reduces a rate of sending the video stream based on the modified size of the receive window, thereby effectively avoiding a risk of the packet loss caused by a queue buffer overflow.

According to a sixth aspect, a device for implementing a video service is provided, and includes a processor and a memory.

The processor is configured to execute an instruction stored in the memory, and the processor implements the method provided in the first aspect or any one of implementations of the first aspect by executing the instruction.

According to a seventh aspect, a transmission device for implementing a video service is provided, and includes a processor and a memory.

The processor is configured to execute an instruction stored in the memory, and the processor implements the method provided in the second aspect or any one of implementations of the second aspect by executing the instruction.

According to an eighth aspect, a computer-readable storage medium is provided, the computer-readable storage medium stores an instruction, and when the instruction is executed on a processor of a computer, the processor is enabled to perform the method provided in the first aspect or any one of implementations of the first aspect, or perform the method provided in the second aspect or any one of implementations of the second aspect.

## BRIEF DESCRIPTION OF DRAWINGS

FIG. 1A and FIG. 1B are a schematic diagram of a networking structure of a communications system 100 according to an embodiment of the present invention;

FIG. 2 and FIG. 3A to FIG. 3D are schematic flowcharts of a method 200 according to Embodiment 1 of the present invention;

FIG. 4A to FIG. 4C are a schematic structural diagram of a device 200 according to Embodiment 2 of the present invention;

FIG. 5 is a schematic structural diagram of a transmission device 300 according to Embodiment 3 of the present invention;

FIG. 6 is a schematic structural diagram of a device 1000 according to Embodiment 4 of the present invention;

FIG. 7 is a schematic structural diagram of a transmission device 2000 according to Embodiment 5 of the present invention; and

FIG. 8 is a schematic structural diagram of a communications system 4000 according to Embodiment 6 of the present invention.

## DESCRIPTION OF EMBODIMENTS

The following describes embodiments of the present invention with reference to the accompanying drawings.

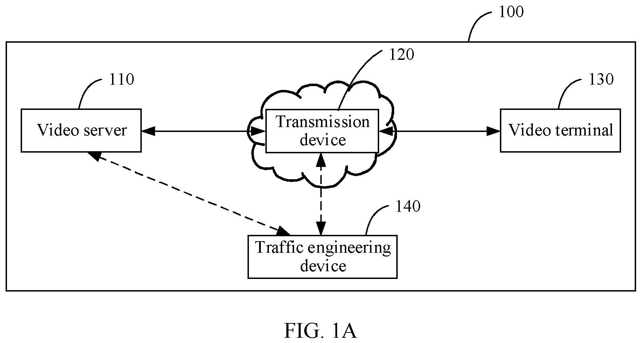

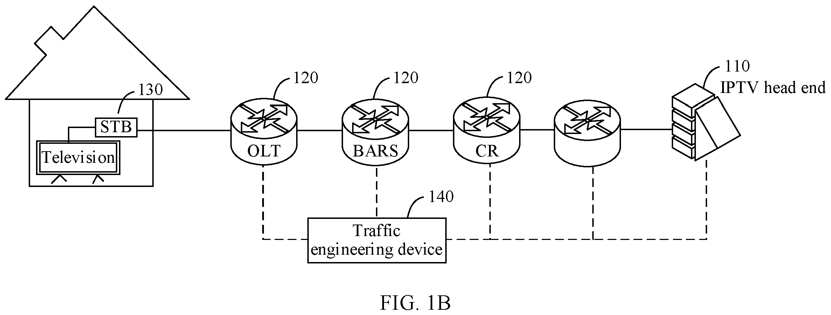

FIG. 1A is a schematic diagram of a networking structure of a communications system 100 according to an embodiment of the present invention. The communications system 100 includes a video server 110, at least one transmission device 120, and a video terminal 130. Both control signaling transmitted between the video server 110 and the video terminal 130 and a data packet that is sent by the video server 110 to the video terminal 130 and in which video data is encapsulated are transmitted by using the transmission device 120.

An application layer protocol used by the video server 110 to send the video data to the video terminal 130 may be the real-time transport protocol (Real-time Transport Protocol, RTP), the hypertext transfer protocol (HyperText Transfer Protocol, HTTP), or the like, and a transport layer protocol used by the video server 110 may be UDP or TCP. Correspondingly, the video data sent by the video server 110 may be sequentially encapsulated with an application layer protocol header, a transport layer protocol header, and an internet protocol (Internet Protocol, IP) header for transmission, or may be sequentially encapsulated with the transport layer protocol header and the IP header for transmission.

The data packet described in this embodiment of the present invention may be an application layer protocol packet, such as an RTP packet or an HTTP packet, or may be a transport layer protocol packet, such as a UDP packet or a TCP packet, or may be an IP packet. A video stream is constituted by the video data encapsulated in the data packet.

The communications system 100 may further include a traffic engineering device 140, configured to perform resource reservation for transmitting the video stream.

During specific implementation, the communications system 100 may be specifically an IPTV system shown in FIG. IB. In the IPTV system, the video server 110 is an IPTV head end, the video terminal 130 is a set top box (Set Top Box, STB), and the transmission device 120 may be a device such as a home gateway, a core router (Core Router, CR), a broadband network gateway (Broadband Network Gateway, BNG), an optical line terminal (Optical Line Terminal, OLT), or a broadband remote access server (Broadband Remote Access Server, BRAS).

The following describes a method 200 provided in Embodiment 1 of the present invention with reference to FIG. 1A, FIG. 1B, FIG. 2, and FIG. 3A to FIG. 3D.

In the method 200, a smooth rate of a video stream is determined based on feature information of the video stream, and the video stream is sent to a video terminal at the smooth rate. For ease of description, subsequently, sending the video stream to the video terminal at the smooth rate is referred to as traffic burst elimination, a device for determining the smooth rate is referred to as a determining device, and a device for implementing the traffic burst elimination is referred to as a target device. The determining device and the target device may be a same device, or may be different devices. If the determining device and the target device are different devices, the determining device sends the determined smooth rate to the target device.

The method 200 in Embodiment 1 of the present invention may be applied to the communications system 100 shown in FIG. 1A and FIG. IB. The determining device may be the video server 110, or any transmission device 120, or the traffic engineering device 140 in the communications system 100, and the target device may be the video server 110, or any transmission device 120 in the communications system 100.

During specific implementation, a deployment location of a traffic burst elimination function may be determined based on a location of a network bottleneck.

If the network bottleneck may occur at any location between a video server and a video terminal, for example, a packet loss rate at any location is relatively high, the traffic burst elimination function may be implemented on the video server or a transmission device close to the video server. For example, the traffic burst elimination function is implemented on an intelligent network interface card of the video server, the traffic burst elimination function is implemented on a device between the video server and the CR, and a router with the traffic burst elimination function is deployed between the video server and the CR.

If the network bottleneck occurs in a downstream of a transmission device (for example, a BRAS), for example, an upstream packet loss rate of the transmission device is not high while a downstream packet loss rate of the transmission device is relatively high, the traffic burst elimination function may be implemented on the transmission device.

During specific implementation, the following several specific implementations may be used.

Implementation 1: The transmission device (for example, the BRAS) located between the video server and the video terminal determines the smooth rate and performs traffic burst elimination.

Implementation 2: A traffic engineering device determines the smooth rate, and at least one transmission device located between the video server and the video terminal performs the traffic burst elimination based on the smooth rate determined by the traffic engineering device.

Implementation 3: The video server determines the smooth rate and performs the traffic burst elimination.

Implementation 4: The traffic engineering device determines the smooth rate, and the video server performs the traffic burst elimination based on the smooth rate determined by the traffic engineering device.

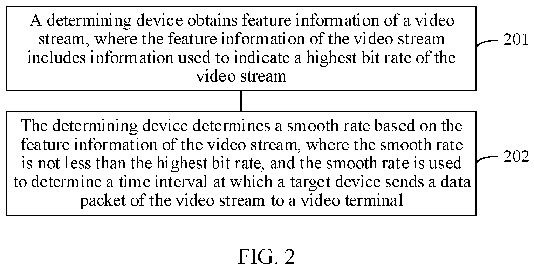

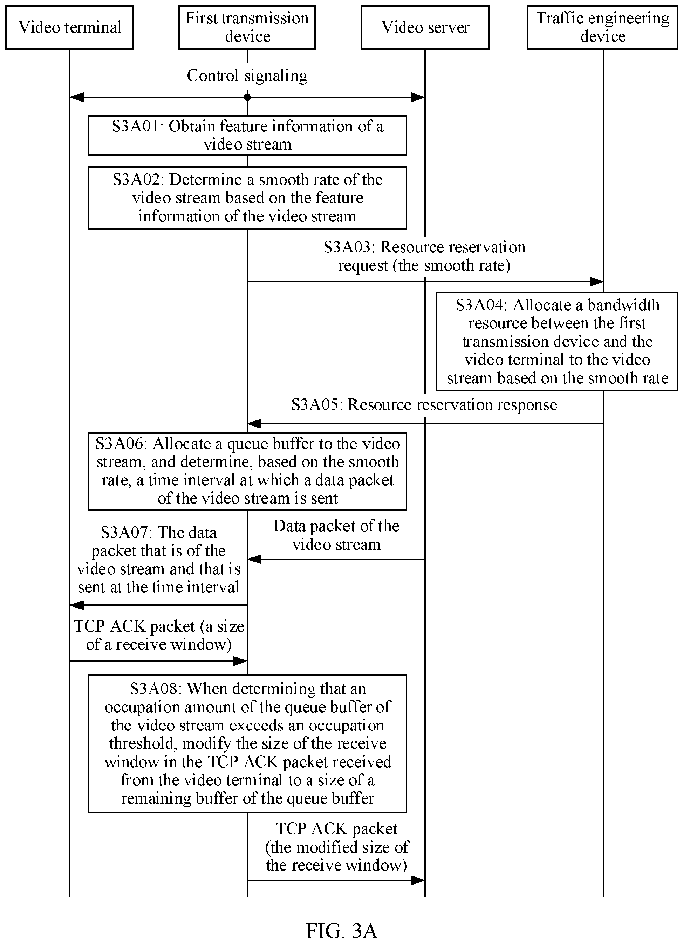

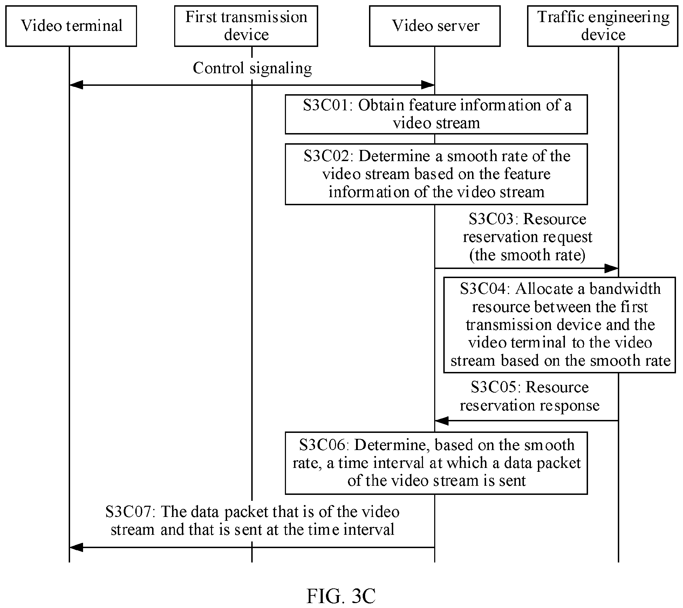

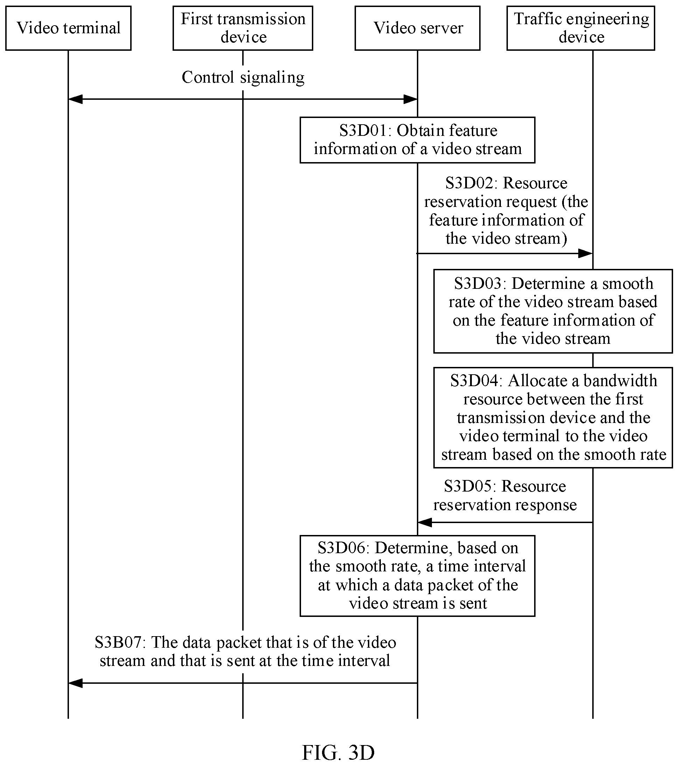

The following first describes, with reference to FIG. 2, an implementation of determining a smooth rate in the method 200 provided in Embodiment 1 of the present invention, and then describes the foregoing four implementations of Embodiment 1 of the present invention with reference to FIG. 3A to FIG. 3D.

As shown in FIG. 2, the method 200 includes the following steps.

FIG. 2 is a schematic flowchart of a method according to Embodiment 1 of the present invention.

S201: A determining device obtains feature information of a video stream.

The feature information of the video stream includes information used to indicate a highest bit rate of the video stream. The information used to indicate the highest bit rate of the video stream may include an average bit rate and a ratio R of the highest bit rate of the video stream to the average bit rate of the video stream, or the information used to indicate the highest bit rate of the video stream may include a highest bit rate $E_{max}$ of the video stream. R is usually a value belonging to an interval [1.5, 4], for example, may be 1.80.

The feature information of the video stream may further include information used to indicate a maximum sending rate of the video stream. The information used to indicate the maximum sending rate of the video stream may include an average bit rate $E_{ave}$ and a ratio n of the maximum sending rate of the video stream to the average bit rate of the video stream, or the information used to indicate the maximum sending rate of the video stream may further be the maximum sending rate of the video stream. The maximum sending rate of the video stream is an estimated maximum value of a rate at which the video server sends the video stream.

A value of n ranges from 1 to 2. If an application layer control protocol of the video stream is RTSP, when a video terminal that receives the video stream enables a fast cache function, the ratio $n \in [1.1, 1.3]$. For example, n is 1.1 or 1.2. When the video terminal does not enable the fast cache function, the ratio n is 1. If a media stream is transmitted by using the hypertext transfer protocol (HyperText Transfer Protocol, HTTP), the ratio $n \in [1.81, 4]$. For example, n is 1.81.

Step S202: The determining device determines a smooth rate based on the feature information of the video stream, where the smooth rate is not less than the highest bit rate, and the smooth rate is used to determine a time interval at which a target device sends a data packet of the video stream to the video terminal.

In step S202, a rate S may be first determined based on the feature information of the video stream or based on the feature information and other information (such as a service policy) of the video stream, and then the rate S is directly used as the smooth rate, or a smaller value between the rate S and a maximum available bandwidth corresponding to the video terminal is determined as the smooth rate. The rate S is positively correlated with the maximum sending rate, and the rate S is positively correlated with the highest bit rate.

The highest bit rate of the video stream is a rate of the video data (namely, bare data). When the video data is transmitted, the video data needs to be encapsulated into the data packet. In addition, to ensure reliability of data transmission, usually, service quality assurance (Service Quality Assurance, SQA) mechanisms such as forward error correction (Forward Error Correction, FEC) and retransmission (Retransmission, RET) are also used, and the mechanisms cause extra traffic overheads. To more accurately calculate the rate S, when the rate S is determined, traffic overheads caused by a transmission overhead factor such as packet header encapsulation or an SQA mechanism further need to be considered. The transmission overhead factor may be represented as a transmission overhead coefficient a, and the determined rate S is positively correlated with the transmission overhead coefficient a, where $1 < a \leq 2$.

A value of a may be related to a type of a transport layer protocol of the video stream. Correspondingly, the feature information of the video stream may further include the type of the transport layer protocol of the video stream, and the value of a may be determined based on the type of the transport layer protocol. When the transport layer protocol of the video stream is TCP, $a \in [1.05, 1.11]$, or when the transport protocol of the video stream is UDP, $a \in [1.05, 1.2]$, and a may be specifically 1.17.

During specific implementation, if only the highest bit rate of the video stream is considered, the rate S may be calculated by using a formula: $S = a*R*E_{ave}$ or $S = a*E_{max}$. If both the highest bit rate of the video stream and the maximum sending rate of the video stream are considered, the rate S may be calculated by using a formula: $S = a*n*R*E_{ave}$ or $S = a*n*E_{max}$.

In addition, the rate S may be further determined with reference to the service policy.

The service policy is used to indicate to preferentially ensure transmission quality of a video stream that meets a preset condition. For example, the service policy is used to indicate to preferentially ensure transmission quality of a 4K video stream, or preferentially ensure transmission quality of a video stream of a very important person (very important person, VIP) user. The service policy may be preset on the determining device.

Correspondingly, the feature information of the video stream may further include information used to indicate whether the video stream meets the preset condition, for example, include information used to indicate whether the video stream is the 4K video stream, or information used to indicate whether a user of the video terminal corresponding to the video stream is the VIP user.

To effectively use bandwidth to meet different requirements on service quality, the determined rate S is positively correlated with a policy coefficient determined according to the service policy, and a value range of the policy coefficient determined based on the service policy may be [0.5, 3]. A value of a policy coefficient $b_1$ corresponding to the video stream that meets the preset condition is greater than a value of a policy coefficient $b_2$ corresponding to a video stream that does not meet the preset condition, where $b_1 \in [0.5, 3]$, and $b_2 \in [0.5, 3]$. During specific implementation, the service policy may include values of policy coefficients respectively corresponding to the video stream that meets the preset condition and the video stream that does not meet the preset condition. For example, a value of a policy coefficient corresponding to the 4K video stream is 2.5, and a value of a policy coefficient corresponding to a non-4K video stream is 1.0. Correspondingly, when determining that the video stream meets or does not meet the preset condition, the determining device determines a value of a corresponding policy coefficient, and further determines the rate S based on the determined value of the policy coefficient.

When a plurality of service policies are used, one coefficient b may be determined according to each service policy, and the determined rate S is positively correlated with a largest value among coefficients b respectively determined based on the plurality of service policies.

Correspondingly, the rate S may be specifically calculated based on the following formula:

$$S = a*B*n*R*E_{ave} \text{ or } S = a*B*n*E_{max}.$$

When one service policy is used, B is a coefficient b determined according to the service policy, or when the plurality of service policies are used, B is the largest value among the coefficients b respectively determined according to the plurality of service policies.

According to the method 200 provided in Embodiment 1 of the present invention, the smooth rate determined based on the highest bit rate of the video stream is not less than the highest bit rate of the video stream, and the time interval at which the data packet is sent and that is determined based on the smooth rate may ensure that the target device sends the data packet to the video terminal at a constant speed at the smooth rate. Therefore, on the premise of ensuring smoothness of video playback, a probability that a downstream device of the transmission device receives burst traffic may be effectively reduced, thereby reducing a packet loss on a network caused by video traffic burst.

The following describes a specific implementation of Implementation 1 of Embodiment 1 of the present invention with reference to FIG. 3A.

In Implementation 1, a target device and a determining device are a same device. The device is a transmission device (for example, a BRAS) located between a video server and a video terminal, and the transmission device is subsequently referred to as a first transmission device.

Step S3A01: The first transmission device obtains feature information of a video stream.

All control signaling transmitted between the video terminal and the video server is transmitted by using the first transmission device. Correspondingly, the first transmission device may obtain a part or all of the feature information of the video stream based on received control signaling.

An application layer control protocol used between the video terminal and the video server may be an RTSP.

When the application layer control protocol used between the video terminal and the video server is the RTSP, a value of tcp.port in transmitted signaling is 554, which indicates that the signaling is an RTSP message, and a value of method in the signaling is used to indicate a type of the signaling, for example, DESCRIBE or SETUP. Correspondingly, the first transmission device may determine, based on the value of tcp.port in received signaling, that an application layer control protocol used between the video terminal and the video server is the RTSP, and may determine the type of the signaling based on the value of method in the received signaling. A process in which the first transmission device obtains the feature information of the video stream is described as follows.

The video terminal first sends a DESCRIBE request to the video server. The DESCRIBE request includes 5-tuple of an RTSP session, that is, a source IP address, a destination IP address, a source port number, a destination port number, and a transport layer protocol. Correspondingly, after detecting the DESCRIBE request, the first transmission device may extract the 5-tuple from the DESCRIBE request. Subsequently, the first transmission device may match, by using the 5-tuple, other control signaling related to the RTSP session, and control signaling including the same 5-tuple corresponds to a same video stream.

After receiving the DESCRIBE request, the video server replies a DESCRIBE response to the video terminal, and a value of a b:as field of an SDP in the DESCRIBE response is an average bit rate of the video stream. For example, b=as:2500, which indicates that the average bit rate is 2500 kps. Correspondingly, after detecting the DESCRIBE response, the first transmission device may extract the average bit rate from the b:as field in the DESCRIBE response.

After receiving the DESCRIBE response, the video terminal sends a SETUP request to the video server, and the SETUP request carries the 5-tuple of the RTSP session. After receiving the SETUP request, the video server returns a SETUP response to the video terminal, a value of a transport field of the SETUP response is a media transmission manner, and the value of the transport field includes a transport layer protocol (such as TCP or UDP) subsequently used to transmit the video stream and a source IP address. For example, the value of the transport field is MP2T/TCP; unicast; interleaved=0-1; mode=PLAY; source=10.3.8.15, which indicates that the transport layer protocol used to transmit the video stream is TCP and a corresponding source IP address is 10.3.8.15. Correspondingly, after detecting the SETUP response, the first transmission device may extract the transport layer protocol and the source IP address from the transport field of the SETUP response. Further, a transmission overhead coefficient a may be determined based on the extracted transport layer protocol. When the transport layer protocol is TCP, a is a value in a range of [1.05, 1.11], or when the transport layer protocol is UDP, a is a value in a range of [1.05, 1.2]. For example, a is 1.17.

After receiving the SETUP response, the video terminal sends a SET_PARAMETER request to the video server, and the SET_PARAMETER request carries the 5-tuple of the RTSP session. After receiving the SET PARAMETER request, the video server returns a SET_PARAMETER response to the video terminal. A value of an x-Fast_Cache field in the SET_PARAMETER response is used to indicate whether the video terminal enables a fast cache function. Correspondingly, after detecting the SET_PARAMETER response, the first transmission device may determine, based on the value of the x-Fast_Cache field in the SET_PARAMETER response, whether the video terminal enables the fast cache function. If it is determined that the fast cache function is enabled, it may be determined that a value of a ratio n of a maximum sending rate of the video stream to the average bit rate of the video stream is a value obtained from a video service provider in advance or a preset value, for example, 1.1 or 1.2. If it is determined that the fast cache function is not enabled, it may be determined that the maximum sending rate is the average bit rate, that is, the value of n is 1.

After receiving the SET_PARAMETER response, the video terminal sends a PLAY request to the video server. After receiving the PLAY request, the video server replies a PLAY response to the video terminal, and sends the video stream to the video terminal.

The application layer control protocol used between the video terminal and the video server may further be HTTP.

The video terminal first sends an HTTP GET request to the video server, and a URL field of the HTTP GET request includes a character "index.m3u8" used to request a top-level index file index.m3u8 of a video. The HTTP GET further includes the 5-tuple, and the 5-tuple includes an IP address of the video server, an IP address of the video terminal, a port number of the video server, a port number and a transport layer protocol of the video terminal. After receiving the HTTP GET request, the video server returns an HTTP GET response to the video terminal, and the HTTP GET response includes the requested top-level index file index.m3u8 of the video. The top-level index file includes description information of different versions (such as a high-definition version and a standard-definition version), and the description information specifically includes an identifier, the average bit rate or the highest bit rate, and a name of a corresponding second-level index file that are of each version. For example, PROGRAM-ID=4, BANDWIDTH=1677722, and 4.m3u8; or PROGRAM-ID=2, BANDWIDTH=614400, and 2.m3u8. Correspondingly, after detecting the HTTP GET request, the first transmission device determines the ratio n of the maximum sending rate of the video stream requested by using the HTTP GET request to the average bit rate of the video stream, where the ratio n is usually 1.81; and extracts, from the HTTP GET, information (that is, an identifier of the video stream) that may be used to identify the video stream, for example, a source IP address (that is, the IP address of the video server), a source port number (that is, the port number of the video server), a destination port number (that is, the port number of the video terminal), and a transport layer protocol of the video stream. The extracted identifier of the video stream may be used to match the video stream and other subsequently received control signaling corresponding to the same video stream. In addition, if the description information of each version includes the average bit rate, the first transmission device may further extract an average bit rate of a version with highest definition as the average bit rate of the video stream; or if the description information of each version includes the highest bit rate, the first transmission device may further extract a highest bit rate of a version with the highest definition as the highest bit rate of the video stream.

After receiving the top-level index file, the video terminal sends, to the video server, the HTTP GET request used to obtain a second-level index file corresponding to one of versions. For example, a user selects a version whose PROGRAM-ID is 4, and a URL of the HTTP GET request includes a character string 4.m3u8, which indicates that the URL is used to request the second-level index file 4.m3u8. After receiving the top-level index file, the video terminal may further request to obtain all second-level index files from the video server. The video server returns the requested second-level index file to the video terminal, where the returned second-level index file includes information about all video fragments of a version corresponding to the second-level index file, for example, includes a url, a size, and duration of each of 100 fragments, and may further include a bit rate of each fragment.

Correspondingly, the first transmission device obtains fragment information from the second-level index file of the version with the highest definition, and determines the average bit rate and the highest bit rate of the video stream based on the fragment information. Specifically, bit rates of fragments may be calculated based on sizes and duration of the fragments in the second-level index file, a bit rate of a fragment with a highest bit rate is used as the highest bit rate of the video stream, an average value of the bit rates of the fragments is calculated, and the average value is used as the average bit rate of the video stream. If the second-level index file includes the bit rates of the fragments, the bit rates of the fragments may not be calculated, while the average bit rate and the highest bit rate of the video stream are directly determined based on the bit rates of the fragments included in the second-level index.

It may be understood that the first transmission device may obtain the highest bit rate and the average bit rate by using the top-level index file, or may obtain the highest bit rate and the average bit rate by using the second-level index file of the version with the highest definition, the highest bit rate and the average bit rate obtained in either manner may be used to calculate a smooth rate.

After receiving the second-level index file, the video terminal sends, to the video server based on the URL of the video fragment in the second-level index file of the version selected by the user, the HTTP GET request used to request a corresponding video fragment. The video server sends the requested video fragment to the video terminal.

In addition, usually, when performing encoding, the video server may further limit the highest bit rate of the video stream to not exceed R times the average bit rate of the video stream. The first transmission device may obtain, from the video server, the multiple R set by the video server before step S3A01 and store the multiple R, or a value of R may be set and stored in the first transmission device. Correspondingly, the stored R may be further obtained in step S3A01.

When TCP is used to transmit the control signaling and the video stream, the first transmission device may be a transparent TCP proxy. After receiving the control signaling sent by the video terminal, the first transmission device interacts with the video server in place of the video terminal, and after receiving the control signaling sent by the video server, interacts with the video terminal in place of the video server, and establishes a TCP connection (subsequently referred to as a TCP connection 1) between the video server and the first transmission device, and a TCP connection (subsequently referred to as a TCP connection 2) between the first transmission device and the video terminal. In addition, the video service sends the video stream to the first transmission device by using the TCP connection 1, and then the first transmission device sends the received video stream to the video terminal by using the TCP connection 2.

After obtaining the average bit rate in the foregoing manner, the first transmission device may further determine, based on the average bit rate, whether the video stream is a 4K video.

The first transmission device may further obtain pre-stored user service policy data of the video terminal based on the IP address of the video terminal, where the user service policy data includes a maximum available bandwidth corresponding to the video terminal and information used to indicate whether the user of the video terminal is a VIP user.

In addition, the first transmission device may further obtain, based on the IP address of the video terminal, a pre-stored identifier of an OLT to which the video terminal belongs, or an identifier of an interface that is connected to the video terminal and that is on the OLT to which the video terminal belongs.

Because the feature information of the video stream may be obtained by parsing the control signaling, and the feature information of the video stream does not need to be obtained by interacting with the video server or the video terminal, load of the video server or the video terminal may be effectively reduced.

Step S3A02: The first transmission device determines the smooth rate of the video stream based on the feature information of the video stream.

An implementation of step S3A02 is the same as that of step S202, and details are not described again.

Step S3A03: The first transmission device sends a resource reservation request to a traffic engineering device, and the resource reservation request includes the smooth rate, to request the traffic engineering device to allocate a bandwidth resource between the first transmission device and the video terminal to the video stream based on the smooth rate.

The smooth rate is used to indicate a size of the bandwidth resource that is requested to be reserved.

Step S3A04: After receiving the resource reservation request, the traffic engineering device allocates the bandwidth resource between the first transmission device and the video terminal to the video stream based on the smooth rate.

The resource reservation request may further include location information of the video terminal. The location information of the video terminal may be specifically the IP address of the video terminal, or the identifier of the OLT to which the video terminal belongs, or the identifier of the interface that is connected to the video terminal and that is on the OLT to which the video terminal belongs. The resource reservation request may further include the identifier of the video stream. The identifier of the video stream may be 5-tuple of the video stream, or may be a part of the 5-tuple of the video stream, for example, the source IP address, the source port number, the destination port number, or the transport layer protocol of the video stream. It may be understood that, if the identifier of the video stream includes the IP address of the video terminal, for example, the identifier of the video stream is the 5-tuple of the video stream, the IP address of the video terminal is both a part of the identifier of the video stream and the location information of the video terminal.

If a network between the first transmission device and the video terminal is a network without a path control capability, for example, a conventional IP network, the traffic engineering device may determine, by using a collected network topology and the location information of the video terminal, a forwarding path that is between the first transmission device and the video terminal and that is used to transmit the video stream, and determines, based on the available bandwidth resource on the transmission path and the smooth rate, whether the video stream can be admitted, that is, determines whether the available bandwidth resource on the transmission path meets a requirement of transmitting the video stream at the smooth rate. If the video stream can be admitted, a bandwidth resource is allocated to the video stream, and step S3A05 is performed. Otherwise, a resource reservation response used to indicate a failed reservation is returned.

If the network between the first transmission device and the video terminal is a network with a path control capability, for example, a multi-protocol label switching (Multi-protocol Label Switching, MPLS) network, the traffic engineering device may determine, for the video stream based on the smooth rate and the location information, a transmission path that is between the first transmission device and the video terminal and that meets the requirement of transmitting the video stream at the smooth rate, and perform step S3A05. Specifically, the traffic engineering device establishes, based on the collected network topology, the location information, and the smooth rate, a tunnel that is between the first transmission device and the video terminal and that is used to transmit the video stream, or calculates the forwarding path that is between the first transmission device and the video terminal and that is used to transmit the video stream. The traffic engineering device may further send a forwarding label corresponding to the tunnel or the forwarding path to a network controller configured to control the transmission path of the video stream, so that the network controller forwards the video stream based on the forwarding label by using a transmission device on the tunnel or the forwarding path. Alternatively, the traffic engineering device may directly send the forwarding label corresponding to the tunnel or the forwarding path to the transmission device located on the tunnel or the forwarding path, to indicate the transmission device on the tunnel or the forwarding path to forward the video stream based on the forwarding label.

Because instead of passively performing resource reservation only when the available bandwidth resource of an existing path meets the requirement of transmitting the video stream at the smooth rate, the transmission path that meets the requirement of transmitting the video stream at the smooth rate may be actively determined and the resource reservation is performed, a probability of successfully performing the resource reservation is relatively high, so that communication efficiency may be effectively improved.

Step S3A05: After allocating the bandwidth resource, the traffic engineering device returns, to the first transmission device, a resource reservation response used to indicate a successful reservation.

The resource reservation response may include the identifier of the video stream. It should be noted that the first transmission device usually requests resource reservation from the traffic engineering device based on a plurality of video streams. The identifier that is of the video stream and that is carried in the resource reservation request and the resource reservation response may be used to indicate a correspondence between resource reservation and a video stream.

Step S3A06: The first transmission device allocates a queue buffer to the video stream, and determines, based on the smooth rate, a time interval at which a data packet of the video stream is sent.

A length of the queue buffer allocated to the video stream may be positively correlated with the smooth rate. The length of the queue buffer may be a product of the smooth rate and buffer duration C, where C may be a value in an interval [10 ms, 1000 ms]. Because a larger smooth rate of the video stream indicates a larger queue buffer allocated to the video stream, a buffer overflow risk may be effectively reduced.

The first transmission device may preset the value of C, for example, 100 ms. Alternatively, C may be determined based on a size of a total buffer of the first transmission device, a planned size of total video traffic that can be accommodated, and a length of the queue buffer planned to be allocated to each video stream. Specifically, C may be determined in the following manner: A quotient of the planned size of the total video traffic that can be accommodated and the length of the queue buffer planned to be allocated to each video stream is used as a total number of video streams that can be accommodated, and a quotient of the size of the total buffer and the total number of the video streams that can be accommodated is used as an estimated queue length. Further, a quotient of the estimated queue length and an estimated smooth rate is used as the value of C, and the estimated smooth rate may be preset, for example, 60 mbps (that is, 60 megabits per second).

For example, if the planned size of the total video traffic that can be accommodated is 512 GB and the length of the queue buffer planned to be allocated to each video stream is 1 GB, a total of 512 video streams may be accommodated. If the size of the total buffer is 100 GB, the estimated queue length is 4 M (100 G/512=4 M). If the estimated smooth rate is 60 mbps, C=4 M/60 mbps=67 ms.

Specifically, a time interval interval may be calculated by using the following formula: interval=size/speed, where size is a size of the data packet, and may be set to 1500 bytes, and speed is the smooth rate.

If the size of the data packet is 1500 bytes and the smooth rate is 90 mbps, a transmission time interval between every two adjacent data packets is 0.13 ms.

Step S3A07: The first transmission device sends, to the video terminal at the time interval, the data packet that is of the video stream and that is received from the video server.

The video stream sent by the video server to the video terminal is transmitted by using the first transmission device. The first transmission device puts the received data packet sent by the video server into the queue buffer, and extracts the data packet from the queue buffer at the time interval and sends the data packet through an egress port. For example, the time interval is 0.13 ms. When there is a data packet in the queue buffer, the first transmission device extracts one data packet from the queue buffer every 0.13 ms, and sends the data packet through the egress port.

In addition, if no priority is marked in the data packet that is of the video stream and that is received by the first transmission device, or a marked priority is lower than a priority of a non-voice and non-video service, the first transmission device may further mark a value of a priority field of each data packet of the video stream as a first priority, where the first priority is higher than the priority of the non-voice and non-video service. Correspondingly, the transmission device between the first transmission device and the video terminal transmits the video stream by using the first priority.

When the video stream is transmitted by using the TCP protocol, when receiving the TCP data packet encapsulated with video data, the video terminal replies a TCP ACK packet to the video server, where the replied TCP ACK carries a receive window size (receive window size, RWS) of the video terminal. Then, the video server adjusts a rate of sending the video stream based on the receive window size carried in the received TCP ACK packet.

Therefore, in a process of transmitting the video stream, the first transmission device may further reduce overflow of the queue buffer of the video stream by performing subsequent steps S3A08 and S3A09.

Step S3A08: When determining that an occupation amount of the queue buffer of the video stream exceeds an occupation threshold, the first transmission device modifies the size of the receive window in the TCP ACK packet received from the video terminal to a size of a remaining buffer of the queue buffer.

The occupation threshold is greater than 50% of the size of the queue buffer, and is usually a value greater than 60% of the size of the queue buffer and less than 70% of the size of the queue buffer.

Step S3A09: The first transmission device sends, to the video server, the TCP ACK packet carrying the modified size of the receive window.

Correspondingly, the video server adjusts the rate of sending the video stream based on the size of the receive window in the received TCP ACK packet.

Because the occupation amount of the queue buffer of the video stream exceeds the occupation threshold, the remaining buffer of the queue buffer is relatively small, that is, the modified size of the receive window is relatively small. Therefore, the video server reduces the rate of sending the video stream based on the modified size of the receive window, thereby effectively avoiding a packet loss caused by a queue buffer overflow.

Step S3A10: After determining that transmission of the video stream ends, the first transmission device releases a queue buffer resource, and sends a resource release request to the traffic engineering device, to request the traffic engineering device to release a resource allocated to the video stream.

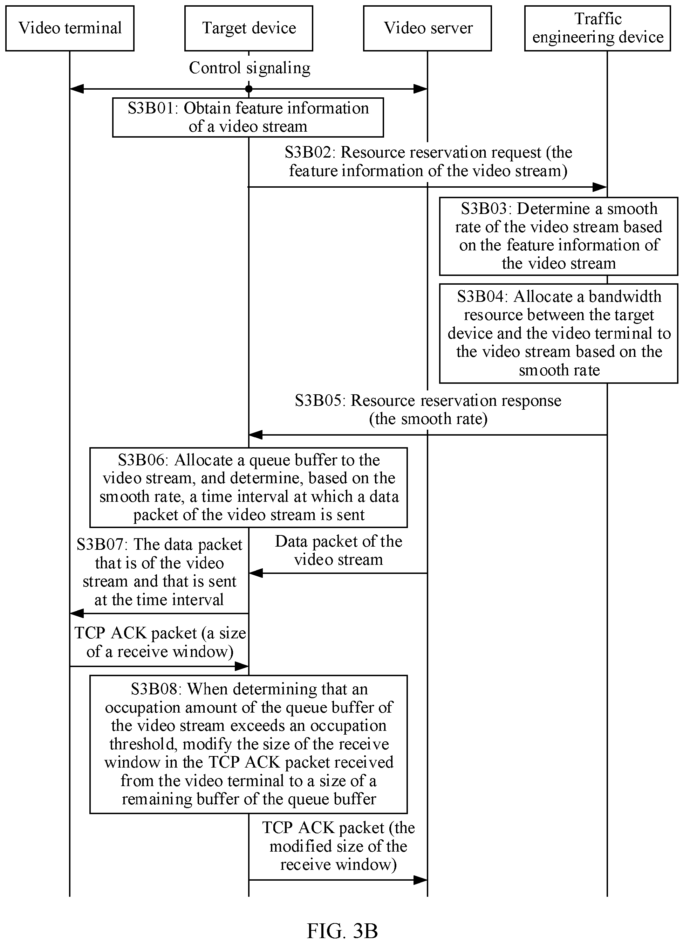

With reference to FIG. 3B, the following describes a specific implementation of Implementation 2 of Embodiment 1 of the present invention.

In Implementation 2, a target device is a transmission device (for example, a BRAS) located between a video server and a video terminal, and a determining device is a traffic engineering device.

Step S3B01: Obtain feature information of a video stream.

Step S3B01 may be performed by the target device (as shown in FIG. 3B), or may be performed by the video server.

If step S3B01 is performed by the target device, specific implementation of step S3B01 is the same as that of step S3A01, and details are not described again.

If step S3B01 is performed by the video server, after receiving a video request sent by the video terminal, the video server may obtain, based on a requested video, stored feature information corresponding to the video.

Step S3B02: Send a resource reservation request to the traffic engineering device, where the resource reservation request includes the feature information of the video stream.

Execution bodies of step S3B02 and step S3B01 are the same.

If step S3B02 is performed by the video server, the resource reservation request may further include an identifier of the video stream, location information of the terminal, and location information of the video server. The location information of the video terminal may be specifically an IP address of the video terminal, or an identifier of an OLT to which the video terminal belongs, or an identifier of an interface that is connected to the video terminal and that is on the OLT to which the video terminal belongs. The location information of the video server may be specifically an IP address of the video server. The identifier of the video stream may be 5-tuple of the video stream, or may be a part of the 5-tuple of the video stream, for example, a source IP address, a source port number, a destination port number, or a transport layer protocol of the video stream. It may be understood that, if the identifier of the video stream includes the IP address of the video terminal, for example, the identifier of the video stream is the 5-tuple of the video stream, the IP address of the video terminal is both a part of the identifier of the video stream and the location information of the video terminal. If the identifier of the video stream includes the IP address of the video server, for example, the identifier of the video stream is the 5-tuple of the video stream, the IP address of the video server is both a part of the identifier of the video stream and the location information of the video server.

Step S3B03: After receiving the resource reservation request, the traffic engineering device obtains the feature information of the video stream from the resource reservation request, and determines a smooth rate based on the obtained feature information of the video stream.

A method for determining the smooth rate is the same as that in step S202, and details are not described again.

Step S3B04: The traffic engineering device allocates a bandwidth resource between the target device and the video terminal to the video stream based on the smooth rate.

Specific implementation of step S3B04 is the same as that of S3A04, and details are not described again.

If an execution body of steps S3B01 and S3B02 is the video server, the traffic engineering device further needs to first determine the target device in step S3B04, specifically, a transmission path that is between the video server and the video terminal and that is used to transmit the video stream may be determined based on the location information of the video terminal and the location information of the video server, a device (that is, the target device) that is used for implementing traffic burst elimination and that is located on the transmission path is determined based on a list of pre-configured devices used for implementing the traffic burst elimination, and then the bandwidth resource between the target device and the video terminal is allocated to the video stream.

Step S3B05: The traffic engineering device sends a notification message to the target device, where the notification message includes the determined smooth rate.

If the execution body of steps S3B01 and S3B02 is the target device, the notification message in step S3B05 is a resource reservation response. The resource reservation request and the resource reservation response may further include the identifier of the video stream, and the identifier is used to indicate a correspondence between resource reservation and a video stream.

If the execution body of steps S3B01 and S3B02 is the video server, in step S3B05, the traffic engineering device wants to send the notification message to the determined target device in step S3B04, and sends, to the video server, a resource reservation response used to indicate a successful reservation.

Steps S3B06 to S3B09 are the same as steps S3A06 to S3A09, and details are not described again.

Implementation 3: Both the target device and the determining device are video servers.

Step S3C01: The video server obtains the feature information of the video stream.

After receiving the video request sent by the video terminal, the video server may obtain, based on the requested video, the stored feature information corresponding to the video.

Step S3C02: The video server determines the smooth rate of the video stream based on the feature information of the video stream.

An implementation of step S3C02 is the same as that of step S202, and details are not described again.

Step S3C03: The video server sends the resource reservation request to the traffic engineering device, where the resource reservation request includes the smooth rate, to request the traffic engineering device to allocate the bandwidth resource between the first transmission device and the video terminal to the video stream based on the smooth rate.

The smooth rate is used to indicate a size of the bandwidth resource that is requested to be reserved.

Step S3C04: After receiving the resource reservation request, the traffic engineering device allocates the bandwidth resource between the first transmission device and the video terminal to the video stream based on the smooth rate.

Specific implementation of step S3C04 is the same as that of S3A04, and details are not described again.

Step S3C05: After allocating the bandwidth resource, the traffic engineering device returns, to the first transmission device, the resource reservation response used to indicate a successful reservation.

The resource reservation response may include the identifier of the video stream. It should be noted that the first transmission device usually requests resource reservation from the traffic engineering device based on a plurality of video streams. The identifier that is of the video stream and that is carried in the resource reservation request and the resource reservation response may be used to indicate a correspondence between resource reservation and a video stream.

Step S3C06: The video server determines, based on the smooth rate, a time interval at which a data packet of the video stream is sent.

A manner of calculating the time interval interval is the same as that in step S3A07, and details are not described again.

Step S3C07: The video server sends the data packet of the video stream to the video terminal at the time interval.

During specific implementation, the video server may include middleware, a protocol stack, and an intelligent network interface card. After performing steps S3C01 and S3C02, the middleware performs step S3C03 to send the resource reservation request to the traffic engineering device by using the intelligent network interface card, receive the resource reservation response by using the intelligent network interface card, and notify the intelligent network interface card of the smooth rate. Correspondingly, the intelligent network interface card performs step S3C06 of determining, based on the smooth rate, the time interval at which the data packet of the video stream is sent.

Further, the middleware reads the video data from a video file of a video requested by a user, and sends the read video data to the protocol stack of the video server by using a system kernel of the video server, for example, sends 100K video data to the protocol stack every 50 ms. The protocol stack of the video server encapsulates the received video data into an IP packet, and sends the encapsulated IP packet to the intelligent network interface card of the video server. Then, the intelligent network interface card of the video server performs step S3C07 of sending the received IP packet at the time interval.

It may be understood that the intelligent network interface card puts the received IP packet into a queue buffer, and extracts the IP packet from the queue buffer at the time interval, and sends the IP packet through an egress port.

Implementation 4: The target device is the video server, and the determining device is the traffic engineering device.

Step S3D01: The video server obtains the feature information of the video stream.

After receiving the video request sent by the video terminal, the video server may obtain, based on the requested video, the stored feature information corresponding to the video.

Step S3D02: The video server sends the resource reservation request to the traffic engineering device, where the resource reservation request includes the feature information of the video stream.

Step S3D03: The traffic engineering device determines the smooth rate based on the feature information of the video stream in the resource reservation request.

A method for determining the smooth rate is the same as that in step S202, and details are not described again.

Step S3D04: The traffic engineering device allocates the bandwidth resource between the video server and the video terminal to the video stream based on the smooth rate.

Specific implementation of step S3D04 is the same as that of S3A04, and details are not described again.

Step S3D05: The traffic engineering device returns the resource reservation response used to indicate the successful reservation to the video server, where the resource reservation response includes the determined smooth rate.

The resource reservation request and the resource reservation response may further include the identifier of the video stream. It should be noted that the target device usually requests the resource reservation from the traffic engineering device based on a plurality of video streams. The identifier that is of the video stream and that is carried in the resource reservation request and the resource reservation response may be used to indicate the correspondence between resource reservation and a video stream.

Step S3D06: The video server determines, based on the smooth rate, the time interval at which the data packet of the video stream is sent.

A manner of calculating the time interval interval is the same as that in step S3A07, and details are not described again.

Step S3D07: The video server sends the data packet of the video stream to the video terminal at the time interval.

During specific implementation, the video server may include the middleware, the protocol stack, and the intelligent network interface card. After performing step S3D01, the middleware performs step S3D02 to send the resource reservation request to the traffic engineering device by using the intelligent network interface card, receive the resource reservation response by using the intelligent network interface card in step S3D05, obtain the smooth rate from the resource reservation response, and notify the intelligent network interface card of the smooth rate. Correspondingly, the intelligent network interface card performs step S3D06 of determining, based on the smooth rate, the time interval for sending the data packet of the video stream, and performs step S3D07 of sending the IP packet received from the protocol stack at the time interval.

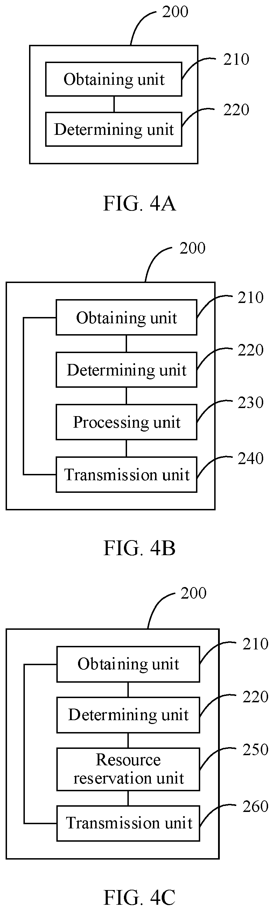

According to Embodiment 1 of the present invention, Embodiment 2 of the present invention provides a device 200. As shown in FIG. 4A, the device 200 includes an obtaining unit 210 and a determining unit 220.

The obtaining unit 210 is configured to obtain feature information of a video stream, where the feature information of the video stream includes information used to indicate a highest bit rate of the video stream.

The determining unit 220 is configured to determine a smooth rate based on the feature information that is of the video stream and that is obtained by the obtaining unit 210, where the smooth rate is not less than the highest bit rate of the video stream, and the smooth bit rate is used to determine a time interval at which a target device sends a data packet of the video stream to a video terminal.

The device 200 and the target device may be a same device (for example, a BRAS or a video server). As shown in FIG. 4B, the device 200 may further include a processing unit 230 and a transmission unit 240.

The processing unit 230 is configured to determine the time interval based on the smooth rate, and send the data packet of the video stream to the video terminal at the time interval by using the transmission unit 240.

The transmission unit 240 is configured to communicate with another device, for example, receive and send control signaling, receive and send the data packet, send a resource reservation request, and receive a resource reservation response.

The device 200 may be specifically the video server, or a traffic engineering device, or a transmission device located between the video server and the video terminal, or may be a service board card that may be deployed on the transmission device. If the device 200 is the service board card deployed on the transmission device, the transmission unit 240 on the service board card may specifically communicate with another device by using an interface board card of the transmission device.

Alternatively, the device 200 may be the traffic engineering device. As shown in FIG. 4C, the device 200 may further include a resource reservation unit 250 and a transmission unit 260.

The transmission unit 260 is configured to receive a resource reservation request, where the resource reservation request includes the feature information of the video stream. Correspondingly, the obtaining unit 210 is specifically configured to obtain the feature information of the video stream from the resource reservation request.

The resource reservation unit 250 is configured to allocate a bandwidth resource between the target device and the video terminal to the video stream based on the smooth rate, and send the smooth rate to the target device by using the transmission unit. The resource reservation request may be received from the target device. Correspondingly, the smooth rate may be carried in a resource reservation response used to indicate a successful reservation, and sent to the target device.

Function units described in Embodiment 2 of the present invention may be configured to implement operations performed by the determining device in the method in Embodiment 1.

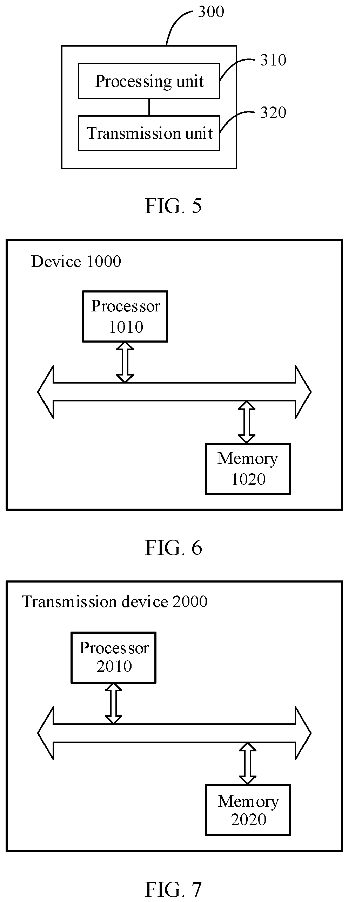

According to Embodiment 1 of the present invention, Embodiment 3 of the present invention provides a transmission device 300. A video stream sent by a video server to a video terminal is transmitted by using the transmission device 300. As shown in FIG. 5, the transmission device 300 includes a processing unit 310 and a transmission unit 320.

The transmission unit 310 is configured to receive an identifier of the video stream and a smooth rate of the video stream.

The processing unit 320 is configured to: when receiving, by using the transmission unit 310, a data packet of the video stream identified by the identifier of the video stream, send the received data packet of the video stream to the video terminal at the time interval by using the transmission unit 310.

The function units described in Embodiment 2 of the present invention may be configured to implement the operations performed by the target device in Implementation 2 in Embodiment 1.

According to Embodiment 1 of the present invention, Embodiment 4 of the present invention provides a determining device 1000. As shown in FIG. 6, the determining device 1000 includes a processor 1010 and a memory 1020. The processor 1010 and the memory 1020 communicate with each other by using a bus.

The memory 1020 is configured to store a computer operation instruction. Specifically, the memory 1020 may be a high-speed RAM memory, or may be a non-volatile memory (non-volatile memory).

The processor 1010 is configured to execute the computer operation instruction stored in the memory 1020. The processor 1010 may be specifically a central processing unit (Central Processing Unit, CPU), an application-specific integrated circuit (Application Specific Integrated Circuit, ASIC), or one or more integrated circuits configured to implement this embodiment of the present invention.

The processor 1010 executes the computer operation instruction, so that the determining device 1000 performs the operations performed by the determining device in the method in Embodiment 1.

The determining device 1000 may be specifically a video server, or a traffic engineering device, or a transmission device located between the video server and a video terminal, or may be a service board card that may be deployed on the transmission device. If the determining device 1000 is the service board card deployed on the transmission device, the processor 1010 on the service board card may specifically communicate with another device by using an interface board card of the transmission device.

According to Embodiment 1 of the present invention, Embodiment 5 of the present invention provides a transmission device 2000. As shown in FIG. 7, the transmission device 2000 includes a processor 2010 and a memory 2020. The processor 2010 and the memory 2020 communicate with each other by using a bus.

The memory 2020 is configured to store a computer operation instruction. Specifically, the memory 2020 may be a high-speed RAM memory, or may be a non-volatile memory (non-volatile memory).

The processor 2010 is configured to execute the computer operation instruction stored in the memory 2020. The processor 2010 may be specifically a CPU, or an ASIC, or one or more integrated circuits configured to implement this embodiment of the present invention.

The processor 2010 executes the computer operation instruction, so that the transmission device 2000 performs the operations performed by the target device in Implementation 2 of Embodiment 1.

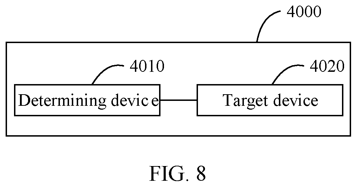

According to Embodiment 1 of the present invention, Embodiment 6 of the present invention provides a communications system 4000. As shown in FIG. 8, the system 4000 includes a determining device 4010 and a target device 4020. The determining device 4010 may perform the operations performed by the determining device in the method in Embodiment 1, and the target device 4020 may perform the operations performed by the target device in the method in Embodiment 1.

The determining device 4010 may be specifically a video server. Correspondingly, the target device 4020 may be specifically a transmission device located between the video server and the video terminal.

Alternatively, the determining device 4010 may be specifically a traffic engineering device. Correspondingly, the target device 4020 may be specifically a video server, or a transmission device located between the video server and the video terminal.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on the computer, the procedure or functions according to the embodiments of the present invention are all or partially generated. The computer may be a general-purpose computer, a dedicated computer, a computer network, or other programmable devices. The computer instruction may be stored in a computer-readable storage medium, or transmitted from one computer-readable storage medium to another computer-readable storage medium. The computer-readable storage medium may be any usable medium accessible by a computer. The usable medium may be a magnetic medium (for example, a floppy disk, a hard disk, or a magnetic tape), an optical medium (for example, a DVD), a semiconductor medium (for example, a solid-state drive (Solid State Disk, SSD)), or the like.

**Claims**

1. A method for implementing a video service, comprising:

   obtaining feature information of a video stream, wherein the feature information of the video stream comprises information used to indicate a highest bit rate of the video stream; and determining a smooth rate based on the feature information of the video stream, wherein the smooth rate is not less than the highest bit rate of the video stream, and the smooth bit rate is used to determine a time interval at which a target device sends a data packet of the video stream to a video terminal.

2. The method according to claim 1, wherein the information used to indicate the highest bit rate of the video stream comprises an average bit rate of the video stream and a ratio of the highest bit rate of the video stream to the average bit rate of the video stream, or the information used to indicate the highest bit rate of the video stream comprises the highest bit rate of the video stream.

3. The method according to claim 1 or 2, wherein the feature information of the video stream further comprises information used to indicate a maximum sending rate of the video stream.

4. The method according to claim 3, wherein the information used to indicate the maximum sending rate of the video stream comprises the average bit rate of the video stream and a ratio of the maximum sending rate of the video stream to the average bit rate of the video stream, or the information used to indicate the maximum sending rate of the video stream comprises the maximum sending rate of the video stream.

5. The method according to any one of claims 1 to 4, wherein the determining a smooth rate based on the feature information of the video stream comprises:

   determining a first rate based on the feature information of the video stream, wherein the first rate is not less than the highest bit rate of the video stream; and using the first rate as the smooth rate, or determining a smaller value between the first rate and a maximum available bandwidth corresponding to the video terminal as the smooth rate.

**6.** The method according to claim 5, wherein the first rate is positively correlated with the highest bit rate of the video stream.

**7.** The method according to claim 5 or 6, wherein the first rate is positively correlated with a transmission overhead coefficient a, wherein $1 < a \leq 2$.

**8.** The method according to claim 7, wherein the information used to indicate the highest bit rate of the video stream comprises an average bit rate $E_{ave}$ of the video stream and a ratio R of the highest bit rate of the video stream to the average bit rate $E_{ave}$ of the video stream; the information used to indicate the maximum sending rate of the video stream comprises the average bit rate $E_{ave}$ and a ratio n of the maximum sending rate of the video stream to the average bit rate $E_{ave}$ of the video stream; and the determining a first rate based on the feature information of the video stream specifically comprises: calculating the first rate S1 based on the following formula:

$$S1 = a*n*R*E_{ave}.$$

**9.** The method according to claim 7, wherein the information used to indicate the highest bit rate of the video stream comprises a highest bit rate $E_{max}$ of the video stream; the information used to indicate the maximum sending rate of the video stream comprises an average bit rate $E_{ave}$ and a ratio n of the maximum sending rate of the video stream to the average bit rate $E_{ave}$ of the video stream; and the determining a first rate based on the feature information of the video stream specifically comprises: calculating the first rate S1 based on the following formula:

$$S1 = a*n*E_{max}.$$

**10.** The method according to any one of claims 1 to 4, wherein the determining a smooth rate based on the feature information of the video stream comprises:

determining a second rate based on the feature information and according to a service policy of the video stream, wherein the second rate is not less than the highest bit rate of the video stream; and using the second rate as the smooth rate, or determining a smaller value between the second rate and a maximum available bandwidth corresponding to the video terminal as the smooth rate, wherein the service policy is used to indicate to preferentially ensure transmission quality of a video stream that meets a preset condition, and the feature information of the video stream further comprises information used to indicate whether the video stream meets the preset condition.

**11.** The method according to claim 10, wherein the second rate is positively correlated with a policy coefficient, a value of a policy coefficient $b_1$ corresponding to the video stream that meets the preset condition is greater than a value of a policy coefficient $b_2$ corresponding to a video stream that does not meet the preset condition, wherein $b_1 \in [0.5, 3]$, and $b_2 \in [0.5, 3]$.

**12.** The method according to any one of claims 1 to 11, wherein the method is performed by the target device; and after the determining a smooth rate based on the feature information of the video stream, the method further comprises:

determining, by the target device, the time interval based on the smooth rate; and sending, by the target device, the data packet of the video stream to the video terminal at the time interval.

**13.** The method according to claim 12, wherein the target device is a transmission device located between a video server that sends the video stream and the video terminal; and the sending the data packet of the video stream to the video terminal at the time interval comprises: when the target device receives the data packet that is of the video stream and that is sent by the video server, sending, by the target device, the received data packet of the video stream to the video terminal at the time interval.

**14.** The method according to claim 13, wherein a length of a queue buffer allocated by the target device to the video stream is positively correlated with the smooth rate.

**15.** The method according to claim 13 or 14, wherein a transport layer protocol of the video stream is the transmission control protocol TCP; and in a process of transmitting the data packet of the video stream between the video server and the video terminal, the method further comprises: when determining that an occupation amount of the queue buffer of the video stream exceeds an occupation threshold, modifying a size of a receive window in a TCP ACK packet received from the video terminal to a size of a remaining buffer of the queue buffer, and sending the TCP ACK packet carrying the modified size of the receive window to the video server.

16. The method according to any one of claims 13 to 15, wherein the obtaining feature information of a video stream comprises: receiving control signaling corresponding to the video stream transmitted between the video terminal and the video server, and determining a part or all of the feature information of the video stream based on the control signaling.

17. The method according to any one of claims 12 to 16, wherein after the determining a smooth rate of the video stream based on the feature information of the video stream, the method further comprises: sending a resource reservation request to a traffic engineering device, wherein the resource reservation request comprises the smooth rate, to request the traffic engineering device to allocate a bandwidth resource between the target device and the video terminal to the video stream based on the smooth rate.

18. The method according to any one of claims 1 to 11, wherein the method is performed by a traffic engineering device; and
before the obtaining feature information of a video stream, the method further comprises: receiving, by the traffic engineering device, a resource reservation request, wherein the resource reservation request comprises the feature information of the video stream;
the obtaining feature information of a video stream comprises: obtaining, by the traffic engineering device, the feature information of the video stream from the resource reservation request; and
after the determining a smooth rate of the video stream based on the feature information of the video stream, the method further comprises:

allocating, by the traffic engineering device, a bandwidth resource between the target device and the video terminal to the video stream based on the smooth rate; and
sending, by the traffic engineering device, the smooth rate to the target device.

19. The method according to claim 18, wherein the resource reservation request further comprises location information of the video terminal; and
before the allocating, by the traffic engineering device, a bandwidth resource between the target device and the video terminal to the video stream based on the smooth rate, the method further comprises:
determining, by the traffic engineering device based on the smooth rate and the location information, a transmission path that is between the target device and the video terminal and that meets a requirement of transmitting the video stream at the smooth rate.

20. A method for implementing a video service, wherein the method is performed by a transmission device located between a video server and a video terminal, and a video stream sent by the video server to the video terminal is transmitted by using the transmission device; and the method comprises:

receiving, by the transmission device, an identifier of the video stream and a smooth rate of the video stream; and
when receiving a data packet of the video stream identified by the identifier of the video stream, sending, by the transmission device, the received data packet of the video stream to the video terminal at the time interval.

21. The method according to claim 20, wherein control signaling transmitted between the video server and the video terminal is transmitted by using the transmission device; a transport layer protocol of the video stream is the transmission control protocol TCP; and in a process in which the transmission device transmits the data packet of the video stream between the video server and the video terminal, the method further comprises: when determining that an occupation amount of a queue buffer of the video stream exceeds an occupation threshold, modifying, by the transmission device, a size of a receive window in a TCP acknowledgment ACK packet received from the video terminal to a size of a remaining buffer of the queue buffer, and sending the TCP ACK packet carrying the modified size of the receive window to the video server.

22. A device for implementing a video service, comprising an obtaining unit and a determining unit, wherein the obtaining unit is configured to obtain feature information of a video stream, and the feature information of the video stream comprises information used to indicate a highest bit rate of the video stream; and
the determining unit is configured to determine a smooth rate based on the feature information of the video stream, wherein the smooth rate is not less than the highest bit rate of the video stream, and the smooth bit rate is used to determine a time interval at which a target device sends a data packet of the video stream to a video terminal.

23. The device according to claim 22, wherein the feature information of the video stream further comprises information used to indicate a maximum sending rate of the video stream.

24. The device according to claim 22 or 23, wherein the determining unit is specifically configured to: determine a first rate based on the feature information of the video stream, wherein the first rate is not less than the highest bit rate of the video stream; and use the first rate as the smooth rate, or determine a smaller value between the first rate and a maximum available bandwidth corresponding to the video terminal as the smooth rate.

25. The device according to claim 24, wherein the first rate is positively correlated with the highest bit rate of the video stream.

26. The device according to claim 24 or 25, wherein the first rate is positively correlated with a transmission overhead coefficient a, wherein $1<a\leq2$.

27. The device according to claim 26, wherein the information used to indicate the highest bit rate of the video stream comprises an average bit rate $E_{ave}$ of the video stream and a ratio R of the highest bit rate of the video stream to the average bit rate $E_{ave}$ of the video stream; the information used to indicate the maximum sending rate of the video stream comprises the average bit rate $E_{ave}$ and a ratio n of the maximum sending rate of the video stream to the average bit rate $E_{ave}$ of the video stream; and the determining unit calculates the first rate S1 based on the following formula:

$$S1=a*n*R*E_{ave}.$$

28. The device according to claim 26, wherein the information used to indicate the highest bit rate of the video stream comprises a highest bit rate $E_{max}$ of the video stream; the information used to indicate the maximum sending rate of the video stream comprises an average bit rate $E_{ave}$ and a ratio n of the maximum sending rate of the video stream to the average bit rate $E_{ave}$ of the video stream; and the determining unit calculates the first rate S1 based on the following formula:

$$S1=a*n*E_{max}.$$

29. The device according to claim 22 or 23, wherein the determining unit is specifically configured to: determine a second rate based on the feature information and according to a service policy of the video stream, wherein the second rate is not less than the highest bit rate of the video stream; and use the second rate as the smooth rate, or determine a smaller value between the second rate and a maximum available bandwidth corresponding to the video terminal as the smooth rate, wherein the service policy is used to indicate to preferentially ensure transmission quality of a video stream that meets a preset condition, and the feature information of the video stream further comprises information used to indicate whether the video stream meets the preset condition.

30. The device according to claim 29, wherein the second rate is positively correlated with a policy coefficient, a value of a policy coefficient $b_1$ corresponding to the video stream that meets the preset condition is greater than a value of a policy coefficient $b_2$ corresponding to a video stream that does not meet the preset condition, wherein $b_1\in[0.5, 3]$, and $b_2\in[0.5, 3]$.

31. The device according to any one of claims 22 to 30, wherein the device and the target device are a same device; and the device further comprises a processing unit and a transmission unit, wherein the processing unit is configured to: determine the time interval based on the smooth rate, and send the data packet of the video stream to the video terminal at the time interval by using the transmission unit.

32. The device according to claim 31, wherein the device is a transmission device located between a video server that sends the video stream and the video terminal, or a service board card in the transmission device; and the processing unit is specifically configured to: when receiving, by using the transmission unit, the data packet that is of the video stream and that is sent by the video server, send the received data packet of the video stream to the video terminal at the time interval by using the transmission unit.

33. The device according to claim 32, wherein a transport layer protocol of the video stream is the transmission control protocol TCP; and the processing unit is further configured to: when determining that an occupation amount of a queue buffer of the video stream exceeds an occupation threshold, modify a size of a receive window in a TCP acknowledgment ACK packet received from the video terminal by using the transmission unit to a size of a remaining buffer of the queue buffer; and send, to the video server by using the transmission unit, the TCP ACK packet carrying the modified size of the receive window.

34. The device according to any one of claims 22 to 30, wherein the device is a traffic engineering device; the device further comprises a resource reservation unit and a transmission unit; the transmission unit is configured to receive a resource reservation request, wherein the resource reservation request comprises the feature information of the video stream;

the obtaining unit is specifically configured to obtain the feature information of the video stream from the resource reservation request; and

the resource allocation unit is configured to: allocate a bandwidth resource between the target device and the video terminal to the video stream based on the smooth rate, and send the smooth rate to the target device by using the transmission unit.

35. The device according to claim 34, wherein the resource reservation request further comprises location information of the video terminal; and

before allocating the bandwidth resource between the target device and the video terminal to the video stream based on the smooth rate, the resource reservation unit is further configured to determine, based on the smooth rate and the location information, a transmission path that is between the target device and the video terminal and that meets a requirement of transmitting the video stream at the smooth rate.

36. A transmission device for implementing a video service, wherein a video stream sent by a video server to a video terminal is transmitted by using the transmission device, and the transmission device comprises: a processing unit and a transmission unit, wherein

the transmission unit is configured to receive an identifier of the video stream and a smooth rate of the video stream; and

the processing unit is configured to: when receiving, by using the transmission unit, a data packet of the video stream identified by the identifier of the video stream, send the received data packet of the video stream to the video terminal at the time interval by using the transmission unit.

37. The transmission device according to claim 36, wherein control signaling transmitted between the video server and the video terminal is transmitted by using the transmission device; a transport layer protocol of the video stream is the transmission control protocol TCP; and

the processing unit is further configured to: when determining that an occupation amount of a queue buffer of the video stream exceeds an occupation threshold, modify a size of a receive window in a TCP acknowledgment ACK packet received from the video terminal by using the transmission unit to a size of a remaining buffer of the queue buffer; and send, to the video server by using the transmission unit, the TCP ACK packet carrying the modified size of the receive window.

38. A communications system, comprising a target device and a determining device, wherein

the determining device is configured to: obtain feature information of a video stream; determine a smooth rate based on the feature information of the video stream; and send the smooth rate to the target device, wherein the feature information of the video stream comprises information used to indicate a highest bit rate of the video stream, and the smooth rate is not less than the highest bit rate of the video stream; and

the target device is configured to: receive the smooth rate sent by the target device; determine, based on the smooth rate, a time interval for sending a data packet of the video stream to a video terminal; and send the data packet of the video stream to the video terminal at the time interval.

39. The communications system according to claim 38, wherein control signaling transmitted between the video server and the video terminal is transmitted by using the target device; a transport layer protocol of the video stream is the transmission control protocol TCP; and

the target device is further configured to: when determining that an occupation amount of a queue buffer of the video stream exceeds an occupation threshold, modify a size of a receive window in a TCP acknowledgment ACK packet received from the video terminal to a size of a remaining buffer of the queue buffer; and send the TCP ACK packet carrying the modified size of the receive window to the video server.

FIG. 1A

FIG. 1B

A determining device obtains feature information of a video stream, where the feature information of the video stream includes information used to indicate a highest bit rate of the video stream — 201

The determining device determines a smooth rate based on the feature information of the video stream, where the smooth rate is not less than the highest bit rate, and the smooth rate is used to determine a time interval at which a target device sends a data packet of the video stream to a video terminal — 202

FIG. 2

| Video terminal | First transmission device | Video server | Traffic engineering device |
|---|---|---|---|

Control signaling

S3A01: Obtain feature information of a video stream

S3A02: Determine a smooth rate of the video stream based on the feature information of the video stream

S3A03: Resource reservation request (the smooth rate)

S3A04: Allocate a bandwidth resource between the first transmission device and the video terminal to the video stream based on the smooth rate

S3A05: Resource reservation response

S3A06: Allocate a queue buffer to the video stream, and determine, based on the smooth rate, a time interval at which a data packet of the video stream is sent

S3A07: The data packet that is of the video stream and that is sent at the time interval

Data packet of the video stream

TCP ACK packet (a size of a receive window)

S3A08: When determining that an occupation amount of the queue buffer of the video stream exceeds an occupation threshold, modify the size of the receive window in the TCP ACK packet received from the video terminal to a size of a remaining buffer of the queue buffer

TCP ACK packet (the modified size of the receive window)

FIG. 3A

| Video terminal | Target device | Video server | Traffic engineering device |
|---|---|---|---|

Control signaling

S3B01: Obtain feature information of a video stream

S3B02: Resource reservation request (the feature information of the video stream)

S3B03: Determine a smooth rate of the video stream based on the feature information of the video stream

S3B04: Allocate a bandwidth resource between the target device and the video terminal to the video stream based on the smooth rate

S3B05: Resource reservation response (the smooth rate)

S3B06: Allocate a queue buffer to the video stream, and determine, based on the smooth rate, a time interval at which a data packet of the video stream is sent

Data packet of the video stream

S3B07: The data packet that is of the video stream and that is sent at the time interval

TCP ACK packet (a size of a receive window)

S3B08: When determining that an occupation amount of the queue buffer of the video stream exceeds an occupation threshold, modify the size of the receive window in the TCP ACK packet received from the video terminal to a size of a remaining buffer of the queue buffer

TCP ACK packet (the modified size of the receive window)

FIG. 3B

| Video terminal | First transmission device | Video server | Traffic engineering device |
|---|---|---|---|

Control signaling

S3C01: Obtain feature information of a video stream

S3C02: Determine a smooth rate of the video stream based on the feature information of the video stream

S3C03: Resource reservation request (the smooth rate)

S3C04: Allocate a bandwidth resource between the first transmission device and the video terminal to the video stream based on the smooth rate

S3C05: Resource reservation response

S3C06: Determine, based on the smooth rate, a time interval at which a data packet of the video stream is sent

S3C07: The data packet that is of the video stream and that is sent at the time interval

FIG. 3C

| Video terminal | First transmission device | Video server | Traffic engineering device |
|---|---|---|---|

Control signaling

S3D01: Obtain feature information of a video stream

S3D02: Resource reservation request (the feature information of the video stream)

S3D03: Determine a smooth rate of the video stream based on the feature information of the video stream

S3D04: Allocate a bandwidth resource between the first transmission device and the video terminal to the video stream based on the smooth rate

S3D05: Resource reservation response

S3D06: Determine, based on the smooth rate, a time interval at which a data packet of the video stream is sent

S3B07: The data packet that is of the video stream and that is sent at the time interval

FIG. 3D

200

Obtaining unit — 210

Determining unit — 220

FIG. 4A

200

Obtaining unit — 210

Determining unit — 220

Processing unit — 230

Transmission unit — 240

FIG. 4B

200

Obtaining unit — 210

Determining unit — 220

Resource reservation unit — 250

Transmission unit — 260

FIG. 4C

300

310

Processing unit

320

Transmission unit

FIG. 5

Device 1000

Processor
1010

Memory
1020

FIG. 6

Transmission device 2000

Processor
2010

Memory
2020

FIG. 7

4000

4010

Determining devic e ——— Target device

4020

FIG. 8

## INTERNATIONAL SEARCH REPORT

| International application No. |
| --- |
| **PCT/CN2018/124101** |

**A.    CLASSIFICATION OF SUBJECT MATTER**

H04N 21/647(2011.01)i

According to International Patent Classification (IPC) or to both national classification and IPC

**B.    FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS; CNTXT; CNKI; VEN: 视频, 报文, 码流, 发送, 传输, 传送, 平均, 均值, 均匀, 最高, 最大, 码流, 速度, 速率, 间隔, 带宽, 流量突发, 丢包, 卡顿, 花屏, Video, stream, message, transmit, transfer, send, average, speed, velocity, coderate, max, highest, largest

**C.    DOCUMENTS CONSIDERED TO BE RELEVANT**

| Category* | Citation of document, with indication, where appropriate, of the relevant passages | Relevant to claim No. |
| --- | --- | --- |
| X | CN 102186119 A (FIBERHOME TELECOMMUNICATION TECHNOLOGIES CO., LTD.) 14 September 2011 (2011-09-14) description, paragraphs [0018]-[0032] | 20, 21, 36, 37 |
| Y | CN 102186119 A (FIBERHOME TELECOMMUNICATION TECHNOLOGIES CO., LTD.) 14 September 2011 (2011-09-14) description, paragraphs [0018]-[0032] | 1-7, 10-19, 22-26, 29-35, 38, 39 |
| Y | CN 101753363 A (HUAWEI TECHNOLOGIES CO., LTD.) 23 June 2010 (2010-06-23) description, paragraphs [0030]-[0072] | 1-7, 10-19, 22-26, 29-35, 38, 39 |
| Y | CN 103561283 A (LESHI ZHIXIN ELECTRONIC TECHNOLOGY (TIANJIN) CO., LTD.) 05 February 2014 (2014-02-05) description, paragraphs [0077]-[0099] | 5, 10, 24, 29 |
| A | KR 101636198 B1 (KNU INDUSTRY COOPERATION FOUND) 05 July 2016 (2016-07-05) entire document | 1-39 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **04 March 2019** | **18 March 2019** |

| Name and mailing address of the ISA/CN | Authorized officer |
| --- | --- |
| **National Intellectual Property Administration, PRC (ISA/CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2018/124101**

| Patent document cited in search report | | | Publication date (day/month/year) | Patent family member(s) | | | Publication date (day/month/year) |
|---|---|---|---|---|---|---|---|
| CN | 102186119 | A | 14 September 2011 | CN | 102186119 | B | 02 January 2013 |
| CN | 101753363 | A | 23 June 2010 | WO | 2010063202 | A1 | 10 June 2010 |
| | | | | CN | 101753363 | B | 27 June 2012 |
| CN | 103561283 | A | 05 February 2014 | EP | 3065286 | A1 | 07 September 2016 |
| | | | | WO | 2015062521 | A1 | 07 May 2015 |
| | | | | US | 2016286267 | A1 | 29 September 2016 |
| | | | | EP | 3065286 | A4 | 07 December 2016 |
| KR | 101636198 | B1 | 05 July 2016 | None | | | |

Form PCT/ISA/210 (patent family annex) (January 2015)

34

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201810142299